Europäisches Patentamt

(19) European Patent Office

Office européen des brevets

(11) Publication number: **0 099 696**
**B1**

(12) **EUROPEAN PATENT SPECIFICATION**

(45) Date of publication of patent specification: **14.01.87**

(21) Application number: **83303893.8**

(22) Date of filing: **04.07.83**

(51) Int. Cl.⁴: **F 02 C 7/26**

(54) **Apparatus for starting a gas turbine engine.**

(30) Priority: **07.07.82 US 395997**

(43) Date of publication of application:
**01.02.84 Bulletin 84/05**

(45) Publication of the grant of the patent:
**14.01.87 Bulletin 87/03**

(84) Designated Contracting States:
**DE FR GB IT NL SE**

(56) References cited:
**DE-A-2 642 347**
**FR-A-1 001 309**
**US-A-2 818 704**
**US-A-2 941 790**
**US-A-4 092 824**
**US-A-4 141 506**

(73) Proprietor: **A/S Kongsberg Väpenfabrikk**
**Kirkegardsveien**
**N-3600 Kongsberg (NO)**

(72) Inventor: **Klaebo, Per**
**Briskeveien 3**
**N-3600 Kongsberg (NO)**

(74) Representative: **Jackson, David Spence et al**
**REDDIE & GROSE 16, Theobalds Road**
**London, WC1X 8PL (GB)**

Courier Press, Leamington Spa, England.

## Description

This invention relates to apparatus for starting a gas turbine engine having a rotary compressor for compressing air, a combustor for burning fuel with the compressed air to produce combustion gases under pressure, and a turbine for expanding the combustion gases to produce mechanical work, the turbine and the compressor being coupled for dependent rotation, wherein the path for compressed air from the compressor to the combustor includes a diffuser for converting high velocity, high pressure air from the compressor into low velocity, higher pressure air for delivery to the combustor, and a valve arrangement which permits flow of compressed air through the diffuser to the combustor and substantially prevents flow of compressed air through the diffuser to the compressor.

Many conventional gas turbine engines starting systems require the use of an auxiliary motor with associated gearing and clutch mechanisms to start the engine. Typically, the auxiliary motor is made to turn a rotary compressor component of the gas turbine engine to initiate the flow of compressed air through the combustor and then through the turbine component in order to initiate rotation of the latter element. Once the necessary speed of rotation in the turbine component is established, fuel is introduced into the combustor and normal operation of the gas turbine engine is established. The necessity for a separate auxiliary starting motor, together with ancillary clutch and mechanical drive systems, increases the bulk, weight and cost of the overall engine, and contributes to the probability for failure of a component and the resultant need for expensive maintenance.

US—A—2 818 704 describes a gas turbine engine starting system which includes between the discharge end of the compressor and the inlet to the combustion chambers an annular diffuser passage through which compressed air is supplied from the compressor to the combustion chambers. The starting of the engine is based on a rocket principle. One of the combustion chambers is converted into a rocket chamber by the provision of a pressure-actuated flow-responsive valve that blocks or closes the inlet to that chamber from the compressor when a suitable rocket propellant, comprising a combustible charge of fuel and liquid oxygen, is introduced and ignited in this combustion chamber. The valve is formed by an arrangement of radial shutter flaps or vanes in the form of thin plates each having one side welded to a respective rod the ends of which serve as pivots and are mounted in outer and inner rings defining the edges of the valve opening. The inner ring is polygonal in cross-section and the radially innermost side of each valve vane is shaped to conform closely to a respective one of the flat outer faces of the inner ring in order to minimise leakage when the valve is shut. The rods are received in spaced radial openings in the inner and outer rings and are rotatable therein from an open position to a closed position in which the vanes are prevented from further rotational motion by overlapping one another.

Other gas turbine engine starting systems are known, as described in US—A—2 941 790, US—A—4 092 824, and DE—A—2 642 347, in which an engine is started by supplying compressed or combustible or decomposing gases to a point in the engine upstream of the turbine. Such systems include valves which prevent the starting gases from flowing back into the compressor or out of the inlet to the engine.

All of these known systems have valves which are additional units of equipment which are incorporated in the engine, and consequently increase the cost and complexity of the engine. The valve described in US—A—2 818 704 is in particular a complex arrangement of many small moving parts, which is especially a disadvantage in a gas turbine engine where the consequences of small pieces of metal being ingested into the turbine can be disastrous.

A form of automatic valve is known from FR—A—1001309 in which a shaped disc member acts as obturator for a shaped orifice. A similar arrangement, but with the disc movement controlled, is described in US—A—4 141 506 in relation to control of the flow from an axial flow fan for a surface effect ship. The shaped disc acts as a flow splitter and is movable between a back plate and the outlet mouth of the fan casing, the shaped disc being provided with a stem so that it resembles, and operates like, a poppet valve.

According to the present invention apparatus for starting a gas turbine engine, as defined hereinbefore, is characterised in that the valve arrangement is formed as part of the diffuser, the diffuser being a plate-type diffuser having an axial inlet, a radial outlet and a radially extending wall member facing towards the axial inlet, and the valve arrangement including a plate member trapped but axially movable between the wall member and the outlet end of the throat of the diffuser and by a chamber enclosing the valve arrangement and having an inlet for pressurized gas from a controlled source, the shape of the diffuser and the disposition of the said chamber being such that when pressurized gas is supplied to the said chamber to start the turbine, an initial flow of the pressurized gas from the said chamber into the diffuser induces the plate member to shift into sealing contact with the outlet end of the throat, and when the compressor supplies compressed air to the diffuser at a higher pressure than the pressurized gas pressure, the plate member is thereby blown back against the wall member to define a plate surface for the diffuser.

Preferably, the diffuser includes an annular nozzle portion having an inner edge defining an axially directed plate diffuser inlet, and a radially directed flared outer edge.

It is further preferred that the apparatus include means for bleeding the pressurized gas to the back surface of the plate member facing the wall member during startup, the bleeding means bypassing the portion of the flow path through the plate diffuser exit, and that the pressurized gas is pressurized air.

The accompanying drawings illustrate one embodiment of the invention and, together with the description, serve to explain the principles of the invention. In the drawings:

Fig. 1 is a schematic cross-sectional view of a plate diffuser showing the non-return valve of the present invention being utilized in a gas turbine engine: and

Fig. 2 is a sectional view taken of a portion of the apparatus shown in Fig. 1, at the location 2—2.

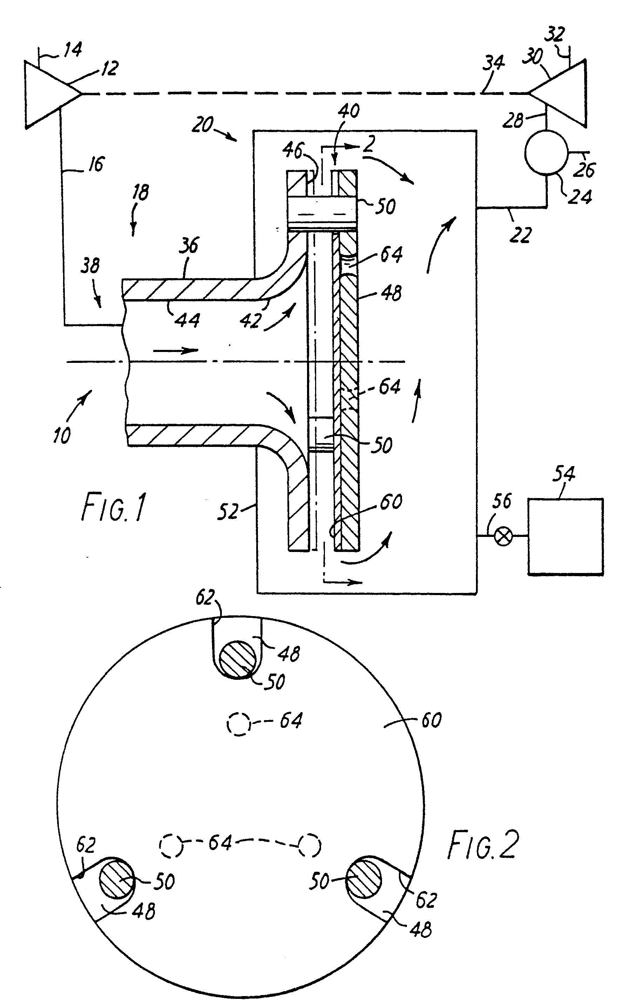

In Fig. 1 of the drawings there is shown schematically a gas turbine engine 10 embodying the present invention. Engine 10 includes a rotary compressor 12 having an inlet 14 for the air to be compressed and an outlet 16 for the compressed air, which is typically delivered at a relatively high velocity. Engine 10 further includes a means 18 for diffusing the high velocity air to convert the kinetic energy of the high velocity gas into increased gas pressure. Engine 10 further includes means 20 for collecting the diffused air from diffusing means 18 and channeling it to the remainder of the engine for utilization. Specific components for achieving the diffusing and collecting functions as they relate to the present invention will be discussed hereinafter.

The high pressure air flows from the collecting means 20 via ducting 22 of a combustor 24 where it is mixed with fuel from a fuel source 26 and combusted to yield high pressure combustion gases. These combustion gases are, in turn, channeled via ducting 28 to a turbine 30 where they are expanded to produce rotary mechanical power. Expanded combustion gases exiting turbine 30 via turbine outlet 32 are then either discharged to the atmosphere or processed further to recover heat values such as in a recuperated gas turbine cycle. One of ordinary skill in the art in designing gas turbine engine systems would readily understand the foregoing and be able to adapt the present invention to a recuperated gas turbine engine application.

The above-described components of engine 10, except for the components constituting the diffusing and collecting means, can be readily selected from any conventional apparatus. For instance, the rotary compressor 12 can be a pure radial or pure axial rotary compressor or a mixed axial-radial machine. Similarly, the rotation of compressor 12 can be directly or indirectly connected to turbine 30. Such a connection is depicted schematically by a broken line 34 between compressor 12 and turbine 30 in Fig. 1.

In accordance with the present invention there is provided diffuser means operatively connected to the rotary compressor to receive and convert the high velocity, high pressure air to relatively low velocity, higher pressure air. As embodied herein and as shown in Fig. 1, diffuser means 18 includes a plate-type radial diffuser 36 which receives high velocity gas through an axial inlet portion 38 and delivers high pressure, low velocity gas through a radial outlet portion 40. In the embodiment shown in Fig. 1, plate diffuser 36 includes an annular nozzle part 42 having an inner edge 44 defining the axial inlet and a flared outer edge 46 defining in part the radial exit 40.

Plate diffuser 36 further includes planar wall member 48 positioned parallel to, and spaced from, nozzle edge 46 by a plurality of spacer studs 50. Three equally spaced spacer studs are shown in Fig. 2 positioned around the circumference of the flared edge 46. The precise dimensions of plate diffuser 36 will depend on the flow capacity of the compressor 12 and one of ordinary skill in the art will be able to make the necessary calculations. Also, more than a single plate diffuser unit may be utilized, and the multiple units may be arranged symmetrically about the periphery of compressor 12.

Further in accordance with the present invention, means are provided for receiving and collecting the diffused air from the plate diffuser 36. As embodied herein, collecting means 20 includes a housing 52 completely surrounding exit 40 of plate diffuser 36 and operatively connected to channel the diffused air to ducting 22 for flow to combustor 24. A flow path is thus defined for the compressed air during normal operation of the gas turbine engine 10, namely through plate diffuser 36 and housing 52 to ducting 22, and this path is shown by the arrows in Fig. 1. The precise shape of housing 52 will depend in general on the shape and orientation of the other components of the engine 10 and on the relative location of ducting 22, as well as on the actual number of individual diffuser units.

Still further in accordance with the present invention, there is provided means for supplying pressurized gas during engine startup to the compressed air flow path downstream of the diffuser means 18 and upstream of the combustor 24. As embodied herein, a high pressure gas source 54 is connected to housing 52 via a valved conduit 56. Thus, upon activation of the valved conduit 56 during startup, the pressurized gas can be admitted to the flow path at a point downstream of plate diffuser 36 and upstream of combustor 24. Upon admission, the pressurized gas flows through the combustor 24 to the turbine 30, thereby causing rotation of that component together with compressor 12 coupled for dependent rotation. The rotation of the turbine 30 and compressor 12 components results in the initiation of flow of pressurized air through engine 10, which air can be mixed with fuel in combustor 24 and the engine 10 started and brought to normal operating conditions.

Preferably, the compressed gas admitted from gas source 54 is compressed air which can be combusted with fuel in combustor 24 to increase the enthalpy and thus the energy deliverable to turbine 30 during startup. However, the present invention is intended to utilize any suitable source of pressurized gas, including a non-oxidizing gas, such as can be delivered from solid fuel gas generator units, and the present invention is not intended to be limited by the particular type of pressurized gas source 54.

Still further in accordance with the present invention, there is provided valve means integral with the diffuser means for preventing reverse flow of the pressurized gas through the compressor through startup. As embodied herein, valve means includes a plate member 60 positioned between the flared edge 46 and the planar wall member 48 of plate diffuser 36. As can be appreciated from Fig. 1, plate member 60 when positioned against wall member 48 provides essentially unrestricted flow through the plate diffuser 36 along the normal flow path, while when positioned against edge 46 (shown in Fig. 1 by the dotted lines) plate member 48 effectively seals off plate diffuser 36 from reverse flow. As can be best seen in Fig. 2 plate member 60 is provided with relief notches 62 corresponding to the location of spacer studs 50 and of a size to permit unrestricted sliding clearance. Plate member 60 thus is constrained for essentially unrestricted axial movement between edge 46 and wall member 48.

During startup operation, valve conduit 56 is activated to allow a quantity of pressurized gas from gas source 54 to be admitted to housing 52. The charge of pressurized gas initially begins to flow into plate diffuser exit 40, as well as through ducting 22. The momentary back flow of pressurized gas through plate diffuser 36 creates a decrease in pressure on the face of plate member 60 adjacent the flared edge 46 relative to the other face of plate member 60, as a consequence of the Bernoulli effect. The net pressure force on plate member 60 is then such to translate it axially into the sealing position where thereafter it is held by the static force of the pressurized gas. After turbine 30 and compressor 12 have started rotation, the flow of compressed air from compressor 12 into the plate diffuser inlet 38 will impact against plate member 60 and translate it axially in the opposite direction against wall member 48 where it will be held during normal operation of engine by the impact force of the turning compressed air stream.

Preferably, wall member 48 is provided with a plurality of through-holes 64 (three are shown in Fig. 2) to allow the pressurized gas access to the back surface of plate member 60, that is, the surface opposite the flared edge 46. Holes 64 serve to decrease the time for plate member 60 to respond to the introduction of pressurized gas from source 54 during startup and consequently to minimize the loss of pressurized gas back through the compressor 12. During a normal operation, the position of holes 64 is such that plate member 60 acts to seal off holes 64 and force the turning compressed air to exit plate diffuser 36 through the normal exit 40.

Claims

1. Apparatus for starting a gas turbine engine having a rotary compressor (12) for compressing air, a combustor (24) for burning fuel with the compressed air to produce combustion gases under pressure, and a turbine (30) for expanding the combustion gases to produce mechanical work, the turbine and the compressor being coupled (34) for dependent rotation, wherein the path for compressed air from the compressor (12) to the combustor (24) includes a diffuser (18) for converting high velocity high pressure air from the compressor (12) into low velocity, higher pressure air for delivery to the combustor (24), and a valve arrangement (46, 48, 60) which permits flow of compressed air through the diffuser (18) to the combustor (24) and substantially prevents flow of compressed air through the diffuser (18) to the compressor (12), characterised in that the valve arrangement (46, 48, 60) is formed as part of the diffuser (18), the diffuser being a plate-type diffuser having an axial inlet (38), a radial outlet (40) and a radially extending wall member (48) facing towards the axial inlet (44), and the valve arrangement including a plate member (60) trapped but axially movable between the wall member (48) and the outlet end of the throat (42) of the diffuser (18) and by a chamber (52) enclosing the valve arrangement (46, 48, 60) and having an inlet for pressurized gas from a controlled source (54, 56), the shape of the diffuser (18) and the disposition of the said chamber (52) being such that when pressurized gas is supplied to the said chamber (52) to start the turbine (30), an initial flow of the pressurized gas from the said chamber into the diffuser (18) induces the plate member (60) to shift into sealing contact with the outlet end of the throat (42), and when the compressor (12) supplies compressed air to the diffuser (18) at a higher pressure than the pressurized gas pressure, the plate member (60) is thereby blown back against the wall member (48) to define a plate surface for the diffuser (18).

2. Apparatus according to claim 1, characterised in that the said wall member (48) is apertured (64) to enhance the response of the said plate member (60) to difference in pressure between the interior of the said chamber (52) and the interior of the diffuser (18).

3. Apparatus according to claim 2, characterised in that said plate diffuser (18, 36) includes

an annular nozzle portion (42) having an inner edge (44) defining an axially directed plate diffuser inlet (38), and a radially directed flared outer edge (46),

the radially outer portion of said plate member (60) together with the spaced adjacent outer nozzle edge (46) forms a radially directed plate diffuser exit (40) when said plate member (60) abuts said wall member (48), and

plate securing means (50) connecting said nozzle portion (42) with said wall member (48) provide unrestricted axial movement of said plate member (60) between said wall member (48) and said nozzle portion (42).

4. Apparatus according to claim 3, characterised in that said plate securing means (50) include a plurality of spacer studs (50) and a corresponding number of relief notches (62) in said plate member (60), said plate member (60) being captured by said studs (50).

**Patentansprüche**

1. Vorrichtung zum Anlassen eines Gasturbinenmotors, der einen rotierenden Kompressor (12) zum Verdichten von Luft, eine Brennkammer (24) zum Verbrennen von Brennstoffen mit der verdichteten Luft zur Erzeugung von unter Druck stehenden Verbrennungsgasen, sowie eine Turbine (30) zum Expandieren der Verbrennungsgase zur Erzeugung mechanischer Arbeit enthält, wobei die Turbine und der Kompressor so miteinander gekuppelt sind, daß sie abhängig voneinander rotieren und die Leitung, über die die komprimierte Luft vom Kompressor (12) zur Verbrennungskammer (24) gelangt, einen Diffusor (18) in dem die hochverdichtete und mit hoher Geschwindigkeit strömende Luft vom Kompressor (12) in höher verdichtete Luft mit niedriger Geschwindigkeit umgewandelt wird, die der Verbrennungskammer zugeführt wird und eine Ventilanordnung (46, 48, 60) enthält, die ein Durchströmen von komprimierter Luft durch den Diffusor (18) zu der Verbrennungskammer (24) zuläßt und ein Durchströmen von komprimierter Luft durch den Diffusor (18) zu dem Kompressor (12) im wesentlichen verhindert, dadurch gekennzeichnet, daß die Ventilanordnung (46, 48, 60) als Teil des Diffusors (18) ausgebildet ist, wobei der Diffusor ein Plattendiffusor mit einem axialen Einlaß (38) und einem radialen Auslaß (40) und einem sich in radialer Richtung erstreckenden Wandungsteil (48) ist, das dem axialen Einlaß (38) gegenüberliegt, daß die Ventilanordnung eine Platte (60) enthält, die zwischen dem Wandungsteil (48) und dem Außlaßende (42) des engen Durchlasses des Diffusors (18) axial verschiebbar eingebaut ist und daß die Ventilanordnung (46, 48, 60) von einer Kammer (52) umgeben ist, die eine Einlaßöffnung für die Zufuhr von unter Druck stehendem Gas aus einer gesteuerten Quelle (54, 56) enthält, wobei die Form des Diffusors (18) und die Anordnung der Kammer (52) so ist, daß wenn der Kammer (52) unter Druck stehendes Gas zugeleitet wird, um die Turbine (30) anzulassen, ein anfänglicher Zufluß von unter Druck stehendem Gas von dieser Kammer in den Diffusor (18) bewirkt, daß sich die Platte (60) in eine abgedichtete Stellung gegen das Auslaßende (42) des engen Durchlasses verschiebt und wenn dem Diffusor (18) durch den Kompressor (12) komprimierte Luft zugeführt wird, dessen Druck höher ist als der des komprimierten Gases, die Platte (60) gegen den Wandungsteil (48) zurückgedrückt wird, um eine Oberflächenplatte für den Diffusor (18) zu bilden.

2. Vorrichtung nach Anspruch 1, dadurch gekennzeichnet, daß der Wandungsteil (48) Öffnungen (64) enthält, um das Ansprechen der Platte (60) auf Druckunterschiede zwischen dem Inneren der Kammer (52) und dem Inneren des Diffusors (18) zu erhöhen.

3. Vorrichtung nach Anspruch 2, dadurch gekennzeichnet, daß der Plattendiffusor (18, 36) ein ringförmiges Auslaßende (42) aufweist, dessen innere Wandung (44) den axialen Einlaß (38) des Plattendiffusors umgibt und das in einen sich radial erstreckenden konisch erweiterten äußeren Wandabschnitt (46) übergeht, daß der radiale äußere Abschnitt der Platte (60) zusammen mit dem im Abstand angeordneten benachbarten äußeren Wandabschnitt (46) eine radial gerichtete Austrittsöffnung (40) des Plattendiffusors bildet, wenn die Platte (60) an dem Wandungsteil (48) anliegt und daß Halteeinrichtungen (50) für die Platte vorgesehen sind, die das ringförmige Auslaßende (42) mit dem Wandungsteil (48) verbinden und eine unbegrenzte axiale Bewegung der Platte (60) zwischen dem Wandungsteil (48) und dem Auslaßende (42) zulassen.

4. Vorrichtung nach Anspruch 3, dadurch gekennzeichnet, daß die Halteeinrichtungen aus mehreren Abstandshaltern (50) und einer entsprechenden Anzahl von Ausnehmungen (62) in der Platte (60) bestehen, wobei die Platte (60) durch die Abstandshalter (50) gehalten wird.

**Revendications**

1. Dispositif de démarrage d'un moteur à turbine à gaz comportant un compresseur rotatif (12) pour comprimer l'air, un brûleur (24) pour brûler le carburant avec l'air comprimé pour produire des gaz de combustion sous pression et une turbine (30) pour la détente des gaz de combustion pour produire du travail mécanique, la turbine et le compresseur étant accouplés (34) pour tourner en dépendance l'un de l'autre, étant précisé que le chemin par lequel l'air comprimé va du compresseur (12) au brûleur (24) comprend un diffuseur (18) pour convertir l'air à vitesse élevée, pression élevée, provenant du compresseur (12) en air à basse vitesse, pression plus élevée pour envoyer au brûleur (24), ainsi qu'un système de soupape (46, 48, 60) qui autorise l'écoulement de l'air comprimé à travers le diffuseur (18) pour venir au brûleur (24) et interdit substantiellement l'écoulement de l'air comprimé à travers le diffuseur (18) pour venir au compresseur (12), caractérisé en ce que le système de soupape (46, 48, 60) est constitué sous forme d'une partie de diffuseur (18), le diffuseur étant un diffuseur du type à plateau comportant une entrée axiale (38), une sortie radiale (40) et un élément (48) formant paroi s'étendant radialement et tourné vers l'entrée axiale (38); et en ce que le système de soupape comporte un élément formant plateau (60) piégé, mais mobile axialement, entre l'élément formant paroi (48) et le côté sortie du passage de section minimale (42) du diffuseur (18); et en ce qu'une chambre (52) entoure le système de soupape (46, 48, 60) et présente une entrée pour le gaz sous pression provenant d'une source sous contrôle (54, 56), la forme du diffuseur (18) et la disposition de ladite chambre (52) étant telles que lorsque l'on envoie du gaz sous pression dans ladite chambre (52) pour démarrer la turbine (30), un écoulement initial de gaz sous pression, depuis ladite chambre vers le diffuseur (18) fait que l'élément formant plateau (60) se décale pour venir en contact d'étanchéité avec le côté sortie du passage de section minimale (42), et que, lorsque le compresseur (12) envoie de l'air comprimé vers le diffuseur (18), sous une pression plus élevée que la pression du gaz sous pression, ceci refoule l'élément formant plateau (60) contre l'élément formant paroi (48) pour définir une surface de plateau pour le diffuseur (18).

2. Dispositif selon la revendication 1, caractérisé en ce que ledit élément formant paroi (48) présente des ouvertures (64) pour améliorer la réponse dudit élément formant plateau (60) à une différence de pression entre l'intérieur de ladite chambre (52) et l'intérieur du diffuseur (18).

3. Dispositif selon la revendication 2, caractérisé en ce que ledit diffuseur à plateau (18, 36) comporte:

une portion formant buse annulaire (42) qui présente un bord intérieur (44) qui définit une entrée (38) dirigée selon l'axe du diffuseur à plateau, et un bord extérieur (46) évasé et dirigé radialement;

en ce que la portion radialement extérieure dudit élément formant plateau (60) forme, avec le bord extérieur voisin, mais espacé, de la buse, une sortie (40) dirigée radialement, du diffuseur à plateau lorsque ledit élément formant plateau (60) vient buter contre l'élément formant paroi (48); et

en ce que des moyens de fixation (50), reliant ladite portion formant buse (42) avec ledit élément formant paroi (48), assurent un mouvement axial sans obstacle dudit élément formant plateau (60), entre ledit élément formant paroi (48) et ladite portion formant buse (42).

4. Dispositif selon la revendication 3, caractérisé en ce que lesdits moyens de fixation (50), du plateau comportent une pluralité de broches d'espacement (50) ainsi qu'un nombre correspondant de rainures de dégagement (62) dans ledit élément formant plateau (60), ledit élément formant plateau (60) étant prisonnier desdites broches (50).

FIG.1

FIG.2